**Europäisches Patentamt**

**European Patent Office**

**Office européen des brevets**

(19)

(11) Veröffentlichungsnummer : **0 303 152 B1**

(12) **EUROPÄISCHE PATENTSCHRIFT**

(45) Veröffentlichungstag der Patentschrift :
13.03.91 Patentblatt 91/11

(51) Int. Cl.⁵ : **B29C 67/22,** // B29K105:04,
B29L31:58

(21) Anmeldenummer : **88112495.2**

(22) Anmeldetag : **01.08.88**

(54) **Verfahren zum Herstellen von Schaumstoffpolstern aus mindestens zwei Schaumstoffe, insbesondere Polyurethan-Schaumstoffe, unterschiedlicher Elastizität bzw. Härte bildenden, fliessfähigen, entsprechend unterschiedlichen Reaktionsgemischen.**

(30) Priorität : 14.08.87 DE 3727131

(43) Veröffentlichungstag der Anmeldung :
15.02.89 Patentblatt 89/07

(45) Bekanntmachung des Hinweises auf die
Patenterteilung :
13.03.91 Patentblatt 91/11

(84) Benannte Vertragsstaaten :
BE DE ES FR GB IT NL SE

(56) Entgegenhaltungen :
EP-A- 0 251 803
EP-A- 0 267 490
US-A- 3 421 932

(73) Patentinhaber : BAYER AG
W-5090 Leverkusen 1 Bayerwerk (DE)

(72) Erfinder : Brock, Martin, Dr.
Silesiusstrasse 82
W-5000 Koeln 80 (DE)
Erfinder : Busch, Ralf, Dr.
Schoenauerstrasse 1
W-6834 Ketsch (DE)
Erfinder : Pohlig, Ralf
Bennert 4
W-5653 Leichlingen 1 (DE)

## Beschreibung

Die Erfindung betrifft ein Verfahren zum Herstellen von Schaumstoffpolstern aus mindestens zwei Schaumstoffe, insbesondere Polyurethan-Schaumstoffe, unterschiedlicher Elastizität bzw. Härte bildenden, fließfähigen, entsprechend unterschiedlichen Reaktionsgemischen, wobei in einen Formhohlraum ein erstes und zumindest ein weiteres Reaktionsgemisch eingebracht werden und zu einem Polster mit Zonen unterschiedlicher Elastizität bzw. Härte ausreagieren gelassen werden, bevor das Polster entformt wird.

Die Herstellung von Formteilen, insbesondere Polstern, durch Formverschäumung findet gegenüber dem früher gebräuchlichen Zuschneideverfahren immer mehr Verbreitung, weil es rationell und nahezu verlustfrei durchführbar ist. Dabei werden die Polster entweder hinterher mit einem Textilüberzug versehen oder ein in ein Vakuumformwerkzeug eingelegter Bezug wird direkt hinterschäumt.

Für die Herstellung von Formteilen mit Zonen unterschiedlicher Härte wurden schon die verschiedensten Verfahren vorgeschlagen :

Gemäß EP-B1-68 820 wird ein zweites Schaumgemisch direkt auf ein erstes Schaumgemisch zu einer Zeit entsprechend einer Volumenexpansion des ersten Gemisches von +100% bis +2.300% eingebracht, so daß eine oder mehrere relativ harte Zone(n) innerhalb eines relativ weichen Schaumes gebildet werden. Bei dieser Verfahrensweise bedarf es des Abwartens bis das erste Reaktionsgemisch die erforderliche Volumenausdehnung erreicht hat, bevor das zweite Reaktionsgemisch aufgegeben werden kann. Dadurch verlängern sich die Zykluszeiten bei der Formverschäumung in unerwünschter Weise. Zudem ist das eigentliche Ziel, nämlich härtere Zonen mit einer Schicht weichen Schaumstoffes zum Erhöhen des Sitzkomforts zu umhüllen, kaum erreichbar, weil die Ausdehnung der weichen Schicht in gewissen Zonen nur auf kleine Dicken beschränkt bleibt, welche die angestrebten Eigenschaften nur in unzureichender Weise vermitteln. Außerdem treten auch noch Schwierigkeiten hinsichtlich einer ausreichenden Reproduzierbarkeit dieser Umhüllungen auf.

Gemäß einem anderen Verfahren (US-A-4 190 697) wird zuerst eine härteren Schaum bildende Mischung in die Form eingebracht, wobei diese erste Mischung anschäumen gelassen wird und eine zweite, weicheren Schaum bildende Mischung eingebracht wird, nachdem die erste Mischung 10 bis 80% ihres vollen Aufschäumvolumens erreicht hat, beim Einbringen die erste Mischung durchdringt und diese zum Aufschwemmen bringt, wonach beide Mischungen ausreagieren und einen Polyurethan-Schaumstoffartikel mit Zonen unterschiedlicher Dichte bilden.

Bei diesem Verfahren ist von Nachteil, daß das Durchdringen und Unterfließen des zuerst eingebrachten Reaktionsgemisches unregelmäßig erfolgt, so daß keine Formteile mit ausreichend reproduzierbaren Eigenschaften, insbesondere hinsichtlich der Eindruckhärte, herstellbar sind.

Keines dieser bekannten Verfahren gibt Hinweise, wie bei der Herstellung von stärker konturierten Polstern, beispielsweise Sitzpolstern mit Seitenwangen, vermieden wird, daß das in dem Bereich des Sitzspiegels aufgegebene Reaktionsgemisch in die Wangenbereiche des Formhohlraumes hinabläuft. In der Praxis hat man dies dadurch gelöst, daß am Formhohlraumboden Stege angeordnet sind, welche insbesondere das Fließen des dem Bereich des Sitzspiegels aufzugebenden Reaktionsgemisches begrenzen, damit Polster mit Zonen unterschiedlicher Härte reproduzierbar herstellbar sind. Derartige Stege verteuern natürlich das Formwerkzeug und hinterlassen im Polsterteil entsprechende Rillen, sogenannte "Pfeifen". Um sie einigermaßen zu kaschieren, werden am Bezug an dieser Stelle häufig Keder vorgesehen. Diese Rillen sind aber Schwachstellen, welche bei ungünstiger Belastung Ausgangsstellen für Risse bilden.

Es besteht die Aufgabe, ein Verfahren zu schaffen, mit welchem Schaumstoffpolster der eingangs genannten Art mit geringem Aufwand, insbesondere mit kürzeren Zykluszeiten, und mit verbesserter Reproduzierbarkeit herstellbar sind, die auch ungewöhnliche Belastungen vertragen.

Gelöst wird diese Aufgabe dadurch, daß diese Reaktionsgemische erst dann in den Formhohlraum eingebracht werden, wenn sie einen angecremten, bereits zähflüssigen Zustand erlangt haben.

Dadurch wird erreicht, daß die Reaktionsgemische beim Eintragen nicht mehr weit auseinanderfließen, sondern – wenn überhaupt noch – nur geringfügig, und daß die weitere Raumverteilung in die Breite eher durch Aufschäumen als durch Fließen erfolgt. Es versteht sich, daß auf größere Formhohlraumbereiche das Reaktionsgemisch bereits mit der Eintragsvorrichtung vorverteilt werden muß. Dazu wird dieser Bereich während des Eintragens des Reaktionsgemisches mit der Gemischeintragsvorrichtung bzw. der Aufgabedüse abgefahren. Um die notwendige Verteilung zu erzielen, wählt man beispielsweise zeilenförmigen oder spiralförmigen Eintrag oder punktförmiges Eintragen auf mehrere Stellen des betreffenden Bereiches. Das Eintragen bereits angecremter Reaktionsgemische verkürzt die Zykluszeiten.

Mit dem neuen Verfahren lassen sich in besonders vorteilhafter Weise Polster mit mehr als zwei unterschiedlichen Schaumstoffen herstellen, wozu die unterschiedlichen Reaktionsgemische nebeneinander, insbesondere in Form von geraden oder gekrümmten Zeilen, eingebracht werden. Auch ein punktförmiges Eintragen der verschiedenen Reaktionsgemische, insbesondere mit unterschiedlichen Mengen, nach einem sinnvollen, dem optimalen Sitzkomfort entsprechenden Schema ist möglich. In jedem Falle muß der Ancremzustand, d.h. die Zähigkeit, im Augenblick des Einbringens auf die noch erforderlichen Fließwege abgestimmt sein. Dies läßt sich am besten durch Versuche empirisch ermitteln. Die unterschiedlichen Reaktionsgemische lassen sich gleichzeitig oder zeitversetzt einbringen. Sie können auch unterschiedlich alt sein, d.h. die Zeitpunkte des Beginns der Vermischung können voneinander abweichen.

Es hat sich als besonders vorteilhaft erwiesen, wenn die Reaktionsgemische beim Einbringen in den Formhohlraum bereits eine Reduzierung der Dichte um mindestens 2/3 erfahren haben.

Hält man sich an diesen Wert, ist einigermaßen sichergestellt, daß kein übermäßiges Fließen der Reaktionsgemische auftritt.

Die Dichte ist Maßstab für die Viskosität. Die Dichte läßt sich bei einem noch nicht anreagierten Gemisch grob, aber ausreichend bestimmen. Diejenige des angecremten Gemisches läßt sich an der Volumenzunahme abschätzen.

Wird das neue Verfahren zum Herstellen von Sitzpolstern mit seitlichen Wangen angewendet, wie sie bei Fahrzeugsitzen üblich sind, so ist darauf zu achten, daß beim Einbringen in den Formhohlraum jenes Reaktionsgemisch, welches in jenen, dem Sitzspiegel entsprechenden Bereich eingegeben wird, bereits zähflüssiger ist als jenes, welches in die den Wangen entsprechenden Bereiche eingebracht wird.

Selbstverständlich können auch beide Reaktionsgemische gleiche Zähigkeit aufweisen. Dann allerdings muß das im Bereich des Sitzspiegels aufgegebene Reaktionsgemisch beim Eintrag bereits derart steif sein und so plaziert werden, daß es nicht mehr in die Wangenbereiche hinabfließen kann. Der Ancremzustand des Reaktionsgemisches für die Seitenwangen ist hier nur insoweit von Bedeutung, als es so schnell nachreagieren muß, daß das aufschäumende Gemisch im Sitzspiegelbereich nicht zu weit nach außen drückt. Auch hier kann der Fachmann durch entsprechende Wahl des Zeitablaufes und der Reaktionsgeschwindigkeiten der Reaktionsgemische auf die Lage der Berührungsflächen der verschiedenen Reaktionsgemische Einfluß nehmen.

## Beispiel

Zu fertigen ist ein Sitzpolster für Kraftfahrzeuge mit einem Sitzspiegel aus Weichschaumstoff geringerer Härte und seitlichen Wangen aus Weichschaumstoff größerer Härte durch Hinterschäumen eines Bezugstoffzuschnittes.

Verwendet werden zwei Kaltschaumstoff-Rezepturen.

Das erste, den weicheren Schaumstoff bildende, für den Sitzspiegelbereich bestimmte Reaktionsgemisch besitzt folgende Rezeptur :

## Komponente A

100 Gew.-Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30 ;

3,1 Gew.-Teile Wasser ;

0,2 Gew.-Teile Bis-Dimethylaminoethylether ;

0,4 Gew.-Teile handelsüblicher Schaumstabilisator, bestehend aus einer Mischung niedermolekularer Siloxane (Stabilisator KS 43 der Bayer AG, Leverkusen, BRD) ;

0,8 Gew.-Teile Triethylendiamin (33%ig in Dipropylenglykol) ;

4,0 Gew.-Teile des Adduktes von $CO_2$ an N-Methylethanolamin.

## Komponente B

54,0 Gew.-Teile eines Isocyanates der Kennzahl 85 mit ca. 65 Gew.-% 4,4'-Diphenylmethan-diisocyanat und ca. 20 Gew.-% 2,4'-Diphenylmethan-diisocyanat und ca. 15 Gew.-% polymerem MDI bei einem NCO-Gehalt von ca. 32,5%.

Das zweite, den härteren Schaumstoff bildende, für die Wangenbereiche bestimmte Reaktionsgemisch besitzt folgende Rezeptur :

## Komponente A

100 Gew.-Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30 ;

3,1 Gew.-Teile Wasser ;

0,2 Gew.-Teile Bis-Dimethylaminoethylether ;

0,4 Gew.-Teile handelsüblicher Schaumstabilisator, bestehend aus einer Mischung niedermolekularer Siloxane (Stabilisator KS 43 der Bayer AG, Leverkusen, BRD) ;

0,8 Gew.-Teile Triethylendiamin (33%ig in Dipropylenglykol) ;

4,0 Gew.-Teile des Adduktes von $CO_2$ an N-Methylethanolamin.

## Komponente B

70,6 Gew.-Teile eines Isocyanates der Kennzahl 110 mit ca. 65 Gew.-% 4,4'-Diphenylmethan-diisocyanat und ca. 20 Gew.-% 2,4'-Diphenylmethan-diisocyanat und ca. 15 Gew.-% polymerem MDI bei einem NCO-Gehalt von ca. 32,5%.

Der Bezugsstoffzuschnitt wird formgetreu an die Wandung des Formhohlraumes eines Vakuumformwerkzeuges angelegt und anschließend gleichzeitig das Schaumstoff geringerer Härte (Stauchhärte nach DIN 53 577 von 3,3 kPa) bildende Reaktionsgemisch dem Bereich des Sitzspiegels des Formhohlraumes sowie das Schaumstoff größerer Härte (Stauchhärte nach DIN 53 577 von 7,3 kPa) bildende Reaktionsgemisch den Bereichen der Wangen aufgegeben.

Das für den Sitzspiegel bestimmte Reaktionsgemisch wird in drei Zeilen im Bereich des Sitzspiegels aufgetragen, wobei eine Zeile mittig aufgebracht wird, während die anderen Zeilen jeweils im Abstand von 5 cm vom Rand der Wangenbereiche entfernt abgelegt werden. Das zweite Reaktionsgemisch wird jeweils in die Wangenbereiche des Formhohlraumes eingegeben. Auch bei diesem Reaktionsgemisch wird darauf geachtet, daß die Ablage derart erfolgt, daß keine zu großen Fließwege erforderlich sind.

## Ansprüche

1. Verfahren zum Herstellen von Schaumstoffpolstern aus mindestens zwei Schaumstoffe, insbesondere Polyurethan-Schaumstoffe, unterschiedlicher Elastizität bzw. Härte bildenden, fließfähigen, entsprechend unterschiedlichen Reaktionsgemischen, wobei in einen Formhohlraum ein erstes und zumindest ein weiteres Reaktionsgemisch eingebracht werden und zu einem Polster mit Zonen unterschiedlicher Elastizität bzw. Härte ausreagieren gelassen werden, bevor das Polster entformt wird, dadurch gekennzeichnet, daß die Reaktionsgemische erst dann in den Formhohlraum eingebracht werden, wenn sie einen angecremten, bereits zähflüssigen Zustand erlangt haben.

2. Verfahren nach Anspruch 1, dadurch gekennzeichnet, daß die Reaktionsgemische beim Einbringen in den Formhohlraum bereits eine Reduzierung der Dichte um mindestens 2/3 erfahren haben.

3. Verfahren nach einem der Ansprüche 1 oder 2 zum Herstellen von Sitzpolstern mit seitlichen Wangen, dadurch gekennzeichnet, daß beim Einbringen in den Formhohlraum jenes Reaktionsgemisch, welches in jenen, dem Sitzspiegel entsprechenden Bereich eingegeben wird, bereits zähflüssiger ist als jenes, welches in die den Wangen entsprechenden Bereiche eingebracht wird.

## Claims

1. A process for the production of foam cushions from different fluid reaction mixtures which form at least two foams differing correspondingly in elasticity or rigidity, more particularly polyurethane foams, in which a first reaction mixture and at least one other reaction mixture are introduced into a mould cavity and left to react to form a cushion having zones of different elasticity or rigidity before the cushion is removed, characterized in that the reaction mixtures are not introduced into the mould cavity until they have started to cream up and are already viscous.

2. A process as claimed in claim 1, characterized in that the reaction mixtures have already undergone a reduction in density of at least two thirds before they are introduced into the mould cavity.

3. A process as claimed in one of claims 1 or 2 for the production of seat cushions with raised sides, characterized in that, when the reaction mixtures are introduced into the mould cavity, that reaction mixture which is placed in the region corresponding to the central part of the seat surface is already more viscous than that which is introduced into the regions corresponding to the sides.

## Revendications

1. Procédé de fabrication de rembourrages en mousse composés de mélanges réactifs différents fluides donnant au moins deux mousses, en particulier des mousses de polyuréthane, d'élasticités ou duretés différentes, où dans la cavité d'un moule un premier et au moins un deuxième mélange de réaction sont introduits et mis en réaction pour former un rembourrage comprenant des zones d'élasticités ou duretés différentes, avant que le rembourrage ne soit démoulé, caractérisé en ce que les mélanges réactifs ne sont introduits dans la cavité du moule que lorsqu'ils ont atteint un état crémeux, déjà visqueux.

2. Procédé selon la revendication 1, caractérisé en ce que les mélanges réactifs, lors de leur introduction dans la cavité du moule, ont déjà subi une réduction de densité d'au moins 2/3.

3. Procédé selon une des revendications 1 ou 2 de fabrication de rembourrages de sièges avec rebords, caractérisé en ce que, lors de son introduction dans la cavité du moule, le mélange réactif introduit dans la zone correspondant à la surface d'assise est déjà plus visqueux que celui qui est introduit dans les zones correspondant aux rebords.